# EUROPÄISCHE PATENTSCHRIFT

(11) **EP 1 446 586 B1**
(45) Veröffentlichungstag und Bekanntmachung des Hinweises auf die Patenterteilung: **28.06.2006**
(21) Anmeldenummer: 02803397.5
(22) Anmeldetag: 21.11.2002
(51) Int. Cl.: F16B 7/18

(54) **HOHLKAMMERPROFILSYSTEM FÜR PRÄZISIONSAUFBAUTEN**
HOLLOW CHAMBER PROFILE SYSTEM FOR PRECISION SUPERSTRUCTURES
SYSTEME PROFILE A CHAMBRE CREUSE POUR CONSTRUCTIONS DE PRECISION

(30) Priorität: 22.11.2001 DE 20119047 U; 22.11.2001 DE 20119042 U
(43) Veröffentlichungstag der Anmeldung: 18.08.2004
(73) Patentinhaber: Kahl, Helmut, D-32457 Porta Westfalica (DE)
(72) Erfinder: Kahl, Helmut, D-32457 Porta Westfalica (DE)
(74) Vertreter: Philipp, Matthias
(86) Internationale Anmeldenummer: PCT/EP2002/013066
(87) Internationale Veröffentlichungsnummer: WO 2003/044376

(56) Entgegenhaltungen:
- EP-A- 0 016 865
- DE-U- 9 216 764
- DE-U- 29 818 011
- FR-A- 1 386 323
- FR-A- 1 596 253

## Beschreibung

Die Erfindung betrifft ein Hohlkammerprofilsystem für Präzisionsaufbauten für Lehren, Mess- und Prüfvorrichtungen sowie Vorrichtungen aller Art, wobei das Hohlkammerprofil einen rechteckigen oder quadratischen Querschnitt aufweist, dessen Außenwände in einem Rastermaß senkrecht zueinander stehende Bohrungen aufweisen, die der Aufnahme von Schrauben und von mit einem Gewinde versehenen in die Bohrungen passenden Gewindeteilen dienen.

Für Präzisionsaufbauten, insbesondere für Lehren, Mess- und Prüfvorrichtungen, beispielsweise sogenannte "Meisterböcke" in der Kfz-Industrie, gibt es besondere Anforderungen an hochpräzise Aufbauten, exakte Wiederholgenauigkeit der Randbedingungen, wie z. B. definierte hohe Torsions- und Biegefestigkeit der Trägerkomponenten, minimale Zentriertoleranzen und hohe Verdrehsicherungseigenschaften.

Aus der DE 92 16 764 U ist ein quaderförmiges Rohr mit Quer- und Passbohrungen sowie mit Stegen mit Vertiefungen für Verbindungselemente bekannt.

Um die eingangs genannten Anforderungen zu erfüllen, sind jedoch Maßnahmen erforderlich, die unwirtschaftliche Erhöhung der Materialstärke und somit der Abmessungen und des Gewichts zur Folge haben. Als nachteilig zeigt sich auch die Montage der geteilten Verbindungselemente, da sie nur einseitig in den Bohrungen voll umfasst werden, wobei das andere Ende in einer Vertiefung eines Steges aufliegt; es kann so in bestimmten Positionen, in denen sich die Auflagefläche z. B. oben befindet, zu Montageproblemen kommen. Weiterhin sind die Vertiefungen der Stege für die geforderten Präzision nicht besonders wirtschaftlich herstellbar, da mehrere Bearbeitungsschritte erforderlich sind.

Weiterhin ist es nachteilig, dass die Zentrier- und Verdrehsicherungseigenschaften in der geforderten hohen Präzision nicht vorhanden sind.

Die Aufgabe der Erfindung besteht darin, ein Profilsystem für Präzisionsaufbauten zu schaffen, das die oben genannten Nachteile aufhebt und die erforderliche Präzision bei gleichzeitiger verbesserter Wirtschaftlichkeit in Herstellung, Material und Montage aufweist, wobei die geforderten engen Toleranzen für Zentrier- und Verdrehsicherungseigenschaften erfüllt werden.

Diese Aufgabe wird durch die kennzeichnenden Merkmale des Hauptanspruchs gelöst.

Die Merkmale der Unteransprüche stellen vorteilhafte Weiterbildungen der Aufgabenlösung dar.

Das Hohlkammerprofil besteht erfindungsgemäß aus regelmäßig angeordneten gleich großen Hohlkammern, die innerhalb von Außenwänden, die einen rechteckigen, vorzugsweise quadratischen Querschnitt bilden, durch Innenwände voneinander getrennt sind.

Die Innenwände stehen erfindungsgemäß jeweils senkrecht auf den Außenwänden und sind mit diesen verbunden. Vorzugsweise bilden sie in der Mitte des Profils eine rechtwinklige Kreuzung.

Die Innenseiten der Hohlkammern sind vorzugsweise mit regelmäßigen Ausnehmungen versehen, wodurch diese Bereiche der Kammerwände in ihrer Wandstärke reduziert werden. Es entsteht somit regelmäßige Bereiche verschiedener Wandstärken. Die geringsten Wandstärken treten in den Mitten der Seitenwände der Hohlkammer auf. Zu den Ecken hin gibt es kurze Übergangsbereiche bis die Wandstärke ihre größte Breite erreicht. Hieraus resultieren Teilbereiche mit Querschnittsvergrößerungen, die dort entstehen, wo die Außenwände sich in den Eckbereichen treffen und wo die Innenwände in Anschlussbereichen mit den Außenwänden zusammentreffen und wo die Innenwände Kreuzungsbereiche bilden. Somit wird ein Hohlkammerprofil mit hoher Torsions- und Biegesteifigkeit mit gleichzeitigem geringen Materialeinsatz, geringem Gewicht und kleinen Abmessungen geschaffen. Zweckmäßigerweise wird das Hohlkammerprofil durch ein Strangpressverfahren hergestellt, denn bei dieser Herstellung wird eine hohe Genauigkeit erzielt, da die Wandstärken in senkrecht zu ihnen stehenden Schnittebenen gleich groß sind.

Das Hohlkammerprofil wird erfindungsgemäß weiterhin mit Bohrungen in einem bestimmten Rastermaß versehen, deren Ebenen senkrecht zueinander stehen. Diese Bohrungen befinden sich in den Außenwänden, wobei in den Innenwänden zu ihnen fluchtende Bohrungen eingebracht werden. Da es sich um fluchtende Bohrungen gleichen Durchmessers und gleicher Toleranz handelt, können diese in einfachster wirtschaftlicher Fertigung mit gleichzeitiger hoher Präzision hergestellt werden.

In besonders vorteilhafter Ausgestaltung werden die Bohrungen nur an den Stellen des Hohlkammerprofils eingebracht, an denen sie entsprechend ihres Einsatzzweckes benötigt werden. Somit ist es möglich, entweder das Hohlkammerprofil vollständig, nur in den Randbereichen und/oder an geeigneten Stellen mit Bohrungen zu versehen.
Die Anordnung der Bohrungen außerhalb eines Rastermaßes ist ebenfalls möglich, wodurch eine vorteilhafte Erweiterung der Vielseitigkeit entsteht.

Denkbar ist auch eine Verwendung von unterschiedlichen Bohrungsdurchmessern mit entsprechend angepaßten Verbindungs-, Befestigungs- und Verdrehsicherungsmitteln.

Die Verbindungs-, Befestigungs- und Verdrehsicherungsmittel bestehen erfindungsgemäß aus zylindrischen Gewinde- und Führungsteilen, Schrauben und Passstücken, wobei die zylindrischen Gewinde- und Führungsteile von den Außenwand- und Innenwandbohrungen aufgenommen und voll umfasst werden. Sie liegen in ihnen nicht nur einseitig auf, sondern werden radial in allen Richtungen gehalten, wodurch sich die Montage vorteilhaft erleichtert und vereinfacht.

Die Befestigung erfolgt durch Schrauben, die in Führungsbohrungen der Führungsteile geführt und in Gewinde der Gewindeteile eingeschraubt werden. Zwischen Gewindeteilen und Führungsteilen werden erfindungsgemäß Passstücke mit Führungsbohrungen für die Schrauben eingesetzt. Diese Passstücke weisen rechteckige und zylindrische Zentrieransätze auf, wobei die rechtwinkligen Zentrieransätze in die Hohlkammern eingesetzt und die zylindrischen Zentrieransätze von Außenwandbohrungen des Hohlkammerprofils aufgenommen werden. Hiermit wird ein Zentrierung der Verbindungs- und Führungsteile sowie eine besonders vorteilhafte Verdrehsicherung der Hohlkammerprofile untereinander erreicht.

Die Passstücke sind bei nicht rechtwinkligen Hohlkammerprofilverbindungen, beispielsweise Überlappungen von zwei Hohlkammerprofilen, mit zwei zylindrischen Zentrieransätzen unterschiedlichen oder gleichen Durchmessers den Außenwandbohrungsabmessungen der Hohlkammerprofile entsprechend versehen. Auch hierbei wird eine vorteilhafte Zentrierung und Verdrehsicherung der Hohlkammerprofile untereinander erzielt.

Eine weitere vorteilhafte Ausgestaltung der Verdrehsicherung von rechtwinkligen Hohlkammerprofilen ergibt sich bei Verwendung eines bevorzugten Rastermaßes der Bohrungen, bei dem die Anordnung der zylindrischen Zentrieransätze auf den rechtwinkligen Zentrieransätzen der Passstücke außermittig erfolgt. Hieraus ergibt sich ein großer Mittenabstand der zylindrischen Zentrieransätze, der die Stabilität der Verdrehsicherung vergrößert.

Es ist zweckmäßig, die zylindrischen Zentrieransätze der Passstücke zu ihrem oberen Bereich mit einer dem Durchmesser der Führungsteile entsprechenden zylindrischen Ausnehmung zu versehen, da dadurch eine weitere vorteilhafte formschlüssige Zentrierung der Verbindungs- und Befestigungsmittel erreicht wird.

Eine weitere vorteilhafte Ausbildung sieht vor, die Führungsbohrungen der Führungsteile mit Senkungen korrespondierend zu den zylindrischen Köpfen der Befestigungsschrauben zu versehen. Damit wird eine weitere Verbesserung der Zentrierung der Verbindungs- und Befestigungsmittel und der Hohlkammerprofile erreicht, wobei zudem die benachbarten, insbesondere die über dem Schraubenkopf befindlichen Hohlkammerbereiche frei bleiben zur Aufnahme weiterer Verbindungsmittel.

Besonders vorteilhaft wirkt sich dabei aus, dass herkömmliche Schrauben anstelle von Passschrauben verwendet werden.

Anhand der Zeichnungen wird nachfolgend ein Ausführungsbeispiel gemäß der Erfindung erläutert. Es zeigt:
- Fig. 1: den Querschnitt eines Hohlkammerprofils einer möglichen Ausführungsform in stirnseitiger Ansicht mit zwei eingesetzten Passstücken zur Verdrehsicherung,
- Fig. 2: eine perspektivische Ansicht eines Hohlkammerprofils nach Fig. 1,
- Fig. 3: eine perspektivische Ansicht von zwei Hohlkammerprofilen als System mit Verbindungs-, Befestigungs- und Verdrehsicherungsmitteln für eine rechtwinklige Verbindung in Explosionsdarstellung,
- Fig. 4: eine perspektivische und zum Teil aufgeschnittene Ansicht des Hohlkammerprofilsystems nach Fig. 3 im zusammengebauten Zustand,
- Fig. 5: die Ansicht gemäß Figur 4, jedoch mit anderen nicht-erfindungsgemäßen Passstücken, und
- Fig. 6: weitere mögliche Ausführungsformen von Hohlkammerprofilen.

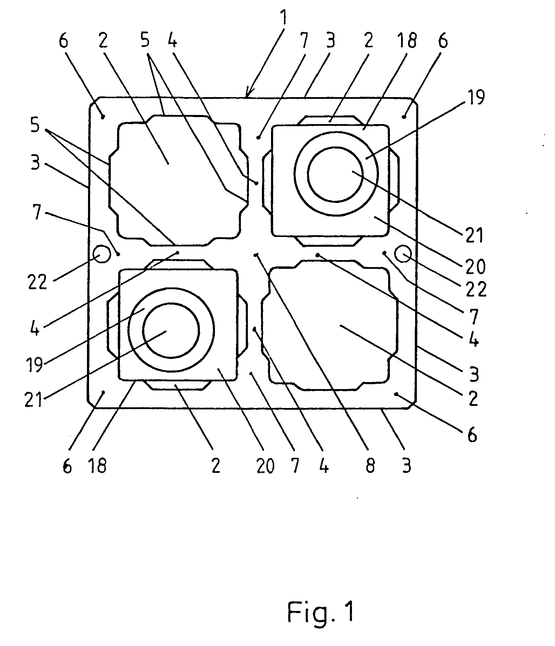

Fig. 1 stellt den Querschnitt einer beispielhaften Ausführungsform eines Hohlkammerprofils 1 dar. Es sind vier Hohlkammern 2 gezeigt, die in einem quadratischen Querschnitt, gebildet von Außenwänden 3, angeordnet sind. Die Hohlkammern 2 sind untereinander durch Innenwände 4 getrennt, die im dargestellten Querschnitt ein Kreuz bilden.

Die Innenseiten der Wände 3, 4 der Hohlkammern 2 weisen gleich große Ausnehmungen 5 auf, wobei sich dadurch eine Reduzierung der Wandstärke sowohl der Innenwände 4 als auch der Außenwände 3 jeweils in diesen Bereichen ergibt. Relativ zu diesen Bereichen resultieren daraus Verbreiterungen der Wände, insbesondere in den Bereichen der Ecken 6 der Außenwände 3, der Anschlußbereiche 7, der Innenwände 4 zu den Außenwänden 3 und der Kreuzung 8 der Innenwände 4.

Im dargestellten beispielhaften Querschnitt befinden sich die Ausnehmungen 5 jeweils mittig auf jeder Innenseite einer Hohlkammer 2, wobei sie annähernd die halbe Länge einer Innenseite besitzen, ihre Tiefe ca. 1/12 ihrer Länge beträgt, ihre Kanten abgerundet sind und in einem Winkel von ca. 45° verlaufen. Alle Hohlkammern 2 besitzen einen symmetrischen gleich großen Querschnitt.

Weiterhin zeigt Fig. 1 zwei Passstücke 18 mit einem rechteckigen Zentrieransatz 20 und einem darauf angeordneten zylindrischen Zentrieransatz 19, die mit ihrem rechteckigen Zentrieransatz 20 jeweils in den oberen stirnseitigen Bereich einer Hohlkammer 2 eingesetzt sind. Sie sind diagonal angeordnet. Nicht dargestellt ist die Möglichkeit, alle Hohlkammern 2 mit Passstücken 18 zu versehen.

Die zylindrischen Zentrieransätze 19 sind außermittig des rechteckigen Zentrieransatzes 20 angeordnet, um einem bevorzugten Rastermaß von korrespondierenden Außenwandbohrungen 9', 11' eines zu verbindenden Hohlkammerprofils 1' zu entsprechen. Die Anordnung der Passstücke 18 in der dargestellten beispielhaften Ausführungsform ergibt in dem bevorzugten Rastermaß einen großen Abstand der Mittellinien der zylindrischen Zentrieransätze 19 in der Diagonalen des Querschnitts des Hohlkammerprofils 1.

Bei Verwendung anderer Rastermaße können die Passstücke 18 beispielsweise durch einfach 90°-Drehungen um die Längsachse der Hohlkammer 2 angepasst werden. Ebenfalls sind Passstücke 18 mit zylindrischen Zentrieransätzen 19, die dem jeweiligen Rastermaß und den Abmessungen der Bohrungen 9, 11 entsprechen, möglich. Weiterhin weist das Profil Aufnahmebohrungen 22 auf, die zur Aufnahme von Passstücken 18' dienen, wenn eine einfache Verdrehsicherung ausreichend ist. Dazu würden dann die Passstücke 18 entfallen.
Weitere Funktionen der Passstücke 18 und 18' werden bei den weiteren Figuren dargestellt und erläutert.

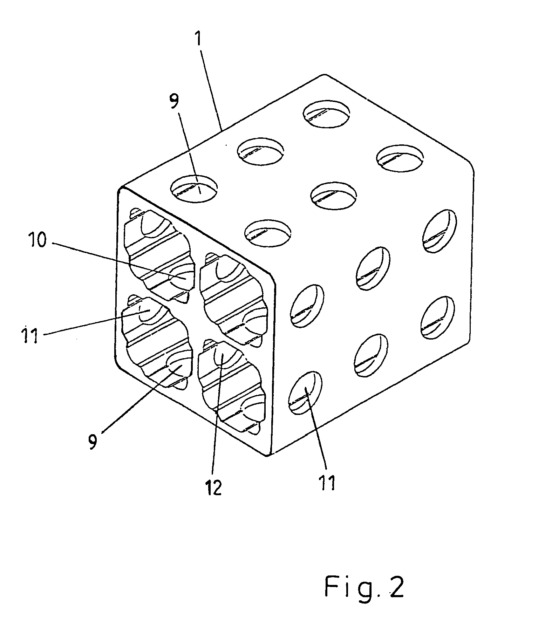

Fig. 2 zeigt eine perspektivische Ansicht eines Hohlkammerprofils 1 mit Außenwandbohrungen 9, 11 und dazu fluchtenden Innenwandbohrungen 10, 12, wobei die Ebenen der jeweils fluchtenden Bohrungen 9, 10 und 11, 12 senkrecht aufeinander stehen. Die Bohrungen 9, 10, 11, 12 dienen zur Aufnahme von Verbindungs-, Befestigungs- und/oder Zentrier- und Verdrehsicherungmitteln, wie in den nachstehenden Figuren gezeigt und erläutert wird.
Nicht dargestellt sind weitere Hohlkammerprofilausführungen mit unterschiedlichen Rastermaßen und unterschiedlichen Bohrungsdurchmessern.

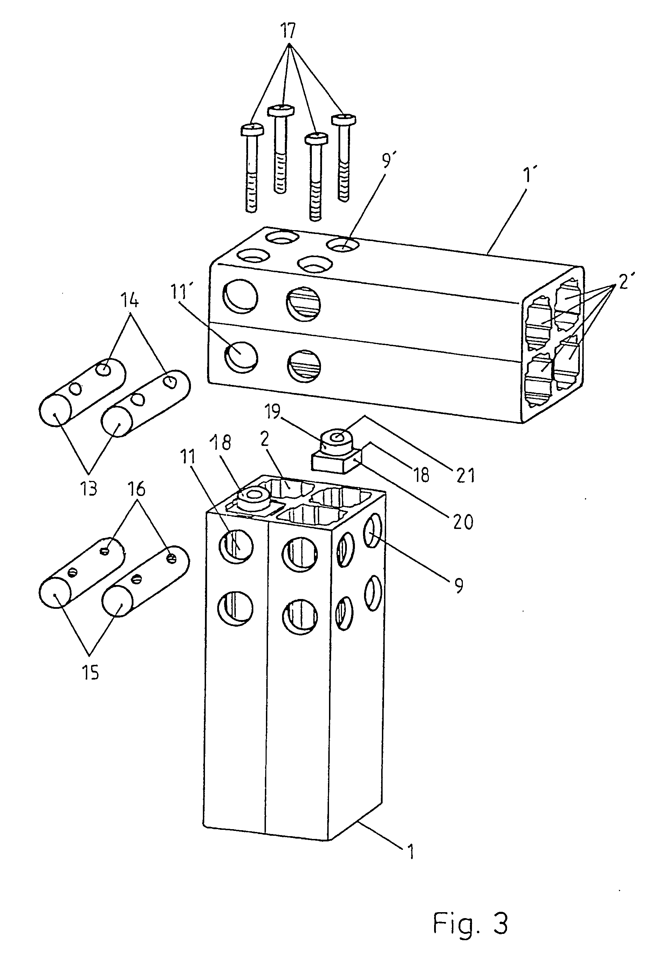

Eine perspektivische Ansicht von zwei Hohlkammerprofilen 1, 1' ist in Fig. 3 als System mit Verbindungs-, Befestigungs- und Verdrehsicherungsmitteln in Explosionsdarstellung für eine rechtwinklige Verbindung gezeigt.

Die Verbindungs- und Befestigungsmittel bestehen aus zylindrischen Führungsteilen 13 mit Führungsbohrungen 14, die nicht dargestellte Senkungen für die Schraubenköpfe der Schrauben 17 aufweisen; weiterhin aus zylindrischen Gewindeteilen 15 mit Gewinde 16, sowie den Passstücken 18, die zur Verdrehsicherung der Hohlkammerprofile 1, 1' untereinander dienen.

Ihre weiteren Funktionen werden weiter unten erläutert.

Zur Verbindung der Hohlkammerprofile 1, 1' werden zunächst die Gewindeteile 15 in die stirnseitigen Bohrungen 11 des Hohlkammerprofils 1 eingeschoben und so ausgerichtet, dass die Mittelachsen der Gewinde 16 in Längsrichtung der Hohlkammern 2 liegen. Die Passstücke 18 werden mit ihren rechtwinkligen Zentrieransätzen 20 stirnseitig in die Hohlkammern 2 des Hohlkammerprofils 1 eingebracht, wobei die rechtwinkligen Zentrieransätze 20 mit ihren Unterseiten auf den Gewindeteilen 15 aufliegen, und ihre Oberseiten mit der Stirnseite des Hohlkammerprofils 1 abschließen und nicht darüber hervorstehen.

Das zu verbindende weitere Hohlkammerprofil 1' wird auf das wie oben beschrieben vorbereitete erste Hohlkammerprofil 1 aufgebracht, dergestalt, dass die zylindrischen Zentrieransätze 19 der Passstücke 18 von den korrespondierenden Außenwandbohrungen 9' des Hohlkammerprofils 1' formschlüssig umfasst werden. Daraus resultiert eine besonders vorteilhafte formschlüssige Verdrehsicherung der so untereinander rechtwinklig verbundenen Hohlkammerprofile 1, 1'.

Zur Befestigung der Hohlkammerprofile 1, 1' untereinander werden nun die Führungsteile 13 in die Bohrungen 11' eingeschoben und so ausgerichtet, dass die Längsachsen ihrer Führungsbohrungen 14 mit den Längsachsen der Bohrungen 9' fluchten.

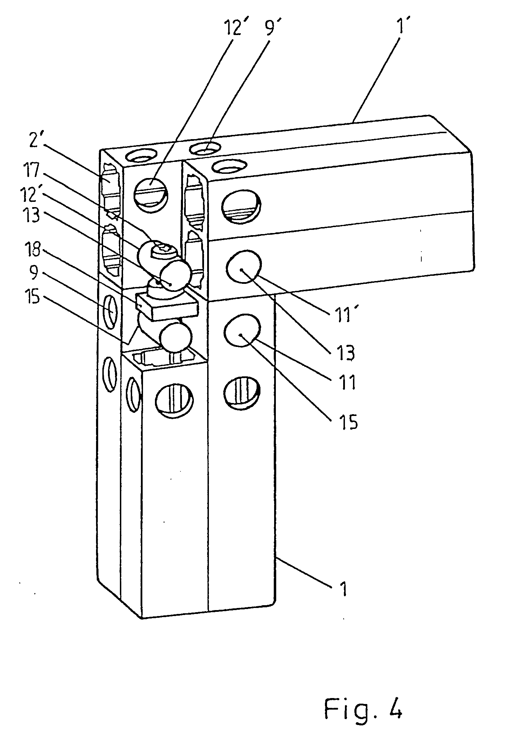

Dieses ist in Fig. 4 im zusammengebauten Zustand in zum Teil aufgeschnittener Darstellung gezeigt.

Die zylindrischen Zentrieransätze 19 der Passstücke 18 besitzen auf ihrer Oberseite eine zylindrische Ausnehmung, die nicht dargestellt ist. Dieses entspricht dem Außendurchmesser der Führungsteile 13, die im zusammengebauten Zustand in diesen Ausnehmungen formschlüssig aufgenommen werden.

Die kraftschlüssige Fixierung der zu verbindenden Hohlkammerprofile 1, 1' erfolgt durch Schrauben 17, die durch die Bohrungen 9' durch die Führungsbohrungen 14 der Führungsteile 13 sowie durch die Führungsbohrungen 21 der Passstücke 18 in die Gewinde 16 der Gewindeteile 15 eingreifen und mittels geeignetem Werkzeug durch die Bohrungen 9' festgezogen werden.
Somit entsteht eine kraft- und formschlüssige verdrehsichere Verbindung der Hohlkammerprofile 1, 1' untereinander, die gleichzeitig zentriert ist, wie unten weiter beschrieben.

Die Führungsteile 13 und Gewindeteile 15 können einteilig und/oder mehrteilig je nach Profilbreite und Verwendungszweck ausgeführt sein. Sie werden von mindestens zwei Bohrungen 9-9, 9-10, 11-11; 11-12 aufgenommen und voll umfasst, dergestalt, dass der die Bohrungen durchdringende zylindrische Körper den Bohrungsdurchmessern entspricht und die Bohrungen in ihrer gesamten oder annähernd gesamten Länge durchdringt.
Im dargestellten Ausführungsbeispiel übergreifen die Führungsteile 13 und Gewindeteile 15 die gesamte Breite des Hohlkammerprofils 1, 1', wobei sie in dieser Ausführungsform von zwei Außenwandbohrungen 11, 11' und einer Innenwandbohrung 12, 12', also insgesamt von drei Bohrungen 11-12-11, 11'-12'-11' aufgenommen und voll umfasst werden.

Die Köpfe der Schrauben 17 werden in nicht dargestellten Senkungen der Führungsbohrungen 14 der Führungsteile 13 aufgenommen, wodurch die darüber liegenden Hohlkammer 2 - Abschnitte zur Aufnahme weiterer Verbindungs- und/oder Befestigungsmittel frei bleiben.

Gleichzeitig ergibt sich damit und durch die Führung der Schrauben 17 in den Führungsbohrungen 21 der Passstücke 18 eine Zentrierung der Führungsteile 13 und Gewinde 15 dergestalt, dass diese immer in beiden Außenwandbohrungen 11, 11' in deren gesamter oder annähernd gesamter Länge in gleichem Maß aufgenommen und voll umfasst werden.

Somit erfüllen die Passstücke 18 eine Dreifachfunktion:
a) Zentrierung der Verbindungs- und Befestigungsmittel 13, 15, 17,
b) Verdrehsicherung der Hohlkammerprofile 1, 1' untereinander,
c) Zentrierung der Hohlkammerprofile 1, 1' untereinander.
Für nicht rechtwinklige Verbindungen, beispielsweise Überlappungen, können die Passstücke 18 voll zylindrisch ausgebildet sein. Bei Anwendungen von geringer, Präzision können die Passstücke 18 auch entfallen.

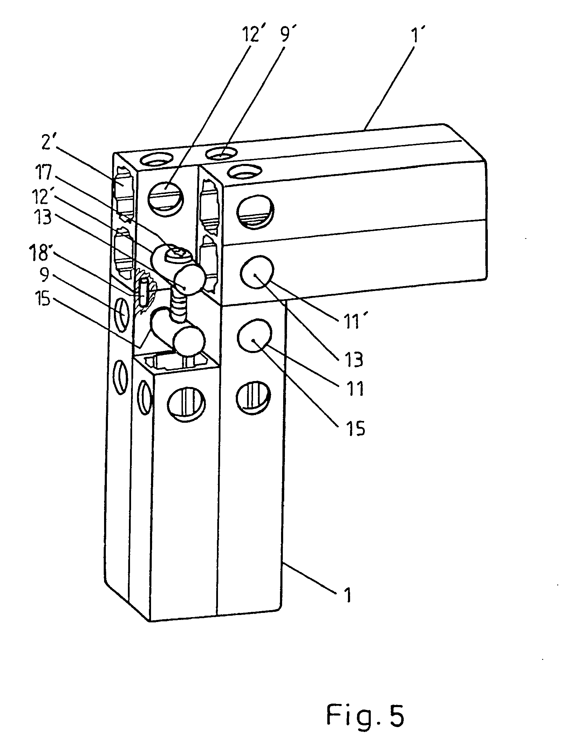

Zur Realisierung einer nicht-erfindungsgemäßen einfachen Verdrehsicherung werden, wie in Fig. 5 gezeigt, die Passstücke 18' in den Aufnahmebohrungen 22 angeordnet. Die Passstücke 18' sind beispielsweise Passstifte, die als Normteile preiswert zu beschaffen sind. Es können ebenso Spannhülsen o. dgl. sein.

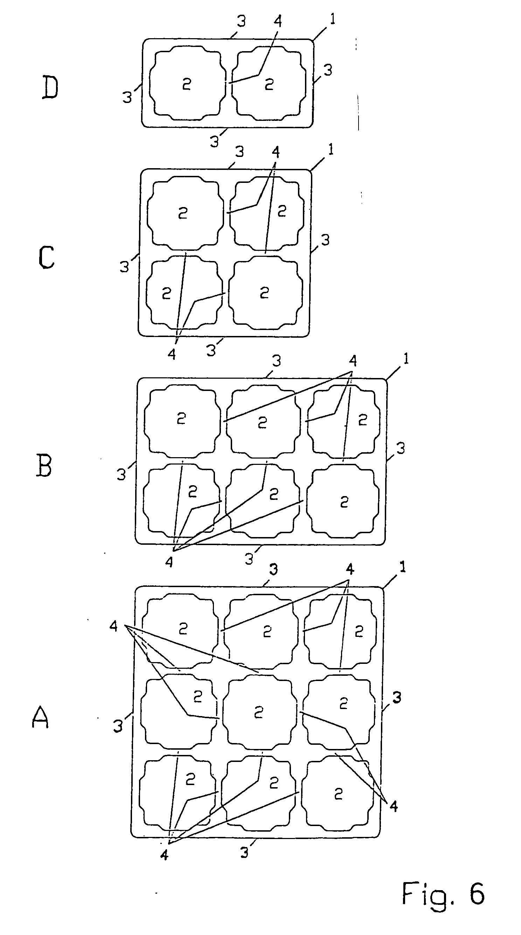

Weitere beispielhafte Anordnungen von Hohlkammern 2 zu Hohlkammerprofilen 1 zeigt Fig. 6 in Ansicht A, dass die Hohlkammern 2 durch Innenwände 4 und durch Innenwände 4 und Außenwände 3 gebildet werden. Ansichten B bis D zeigen, dass die Hohlkammern 2 durch Innenwände 4 und durch Außenwände 3 gebildet werden.

Weitere Ausführungsformen im Rahmen der Ansprüche sind denkbar; die Erfindung beschränkt sich nicht auf die ausgeführten Beispiele.

## Patentansprüche

1. Hohlkammerprofilsystem für Präzisionsaufbauten für Lehren, Meß- und Prüfvorrichtungen sowie Vorrichtungen aller Art, wobei das Hohlkammerprofil (1) einen rechteckigen oder quadratischen Querschnitt aufweist, dessen Außenwände (3) in einem Rastermaß senkrecht zueinander stehende Bohrungen (9, 11) aufweisen, die der Aufnahme von Schrauben (17) und von mit einem Gewinde (16) versehenen in die Bohrungen (9, 11) passenden Gewindeteilen (15) des Hohlkammerprofilsystems dienen, **dadurch gekennzeichnet, dass** das Hohlkammerprofil (1) mindestens eine Innenwand (4) aufweist, die rechtwinklig auf Außenwänden (3) des Hohlkammerprofils (1) steht und **dadurch** mehrere Hohlkammern (2) mit gleichem Querschnitt ausgebildet sind und die Innen- und Außenwände (4, 3) miteinander fluchtende Bohrungen (10, 12; 9, 11) aufweisen und in die Hohlkammern (2) jeweils ein Passstück (18) des Hohlkammerprofilsystems mit einem jeweils zum Profil der Hohlkammern (2) korrespondierenden rechteckigen Zentrieransatz (20) und einem darauf angeordneten zylindrischen, zu den Bohrungen (10, 12; 9, 11) querschnittsgleichen Zentriersatz (19) und einer durchgehenden, zum zylindrischen Zentrieransatz (19) koaxialen Führungsbohrung (21) einzusetzen ist.

2. Hohlkammerprofilsystem nach Anspruch 1, **dadurch gekennzeichnet, dass** der zylindrische Zentrieransatz (19) mit der Führungsbohrung (21) außermittig des rechtwinkligen Zentrieransatzes (20) angeordnet ist.

3. Hohlkammerprofilsystem nach Anspruch 1 oder 2, **dadurch gekennzeichnet, dass** der zylindrische Zentrieransatz (19) eine zylindrische Ausnehmung aufweist, deren Radius dem der Bohrungen (9 - 12) entspricht, und deren Mittelachse senkrecht zur Mittelachse des zylindrischen Zentrieransatzes (19) steht.

4. Hohlkammerprofilsystem nach einem der Ansprüche 1 bis 3, **dadurch gekennzeichnet, dass** mindestens zwei Passstücke (18) zur Verdrehsicherung von mehreren Hohlkammerprofilen (1, 1') untereinander zwischen zylindrischen Führungsteilen (13) und Gewindeteilen (15) angeordnet sind, dass die Ecken (6) der Außenwände (3), die Anschlussbereiche (7) der Innenwände (4) zu den Außenwänden (3) sowie Kreuzungen (8) der Innenwände (4) Querschnittsvergrößerungen aufweisen und in diesen wänden die Führungsteile (13) und die Gewindeteile (15) von Außenwandbohrungen (9, 11) und Innenwandbohrungen (10, 12) mit korrespondierendem Querschnitt aufgenommen und voll umfaßt werden.

5. Hohlkammerprofilsystem nach Anspruch 1, **dadurch gekennzeichnet, daß** Querschnittsvergrößerungen in den Ecken (6) der Außenwände (3), an den Anschlußbereichen (7) der Innenwände (4) an die Außenwände (3) sowie an Kreuzungen (8) von Innenwänden (4) ausgebildet sind.

## Claims

1. Hollow-chamber profile system for precision structures for gauges, measuring and testing devices and all types of devices, the hollow-chamber profile (1) having a rectangular or square cross section whose outer walls (3) have drilled holes (9, 11) which are arranged perpendicularly to one another in a grid pattern and which serve to receive screws (17) and also threaded parts (15), provided with a thread (16), of the hollow-chamber profile system which fit into the drilled holes (9, 11), **characterized in that** the hollow-chamber profile (1) has at least one inner wall (4) which is at a right angle to outer walls (3) of the hollow-chamber profile (1), thereby resulting in the formation of a plurality of hollow chambers (2) of identical cross section, and the inner and outer walls (4, 3) have mutually aligned drilled holes (10, 12; 9, 11), and an adapter (18) of the hollow-chamber profile system can be inserted into each of the hollow chambers (2), the adapter having a rectangular centring attachment (20) corresponding to the respective profile of the hollow chambers (2), a cylindrical centring attachment (19) which is arranged on the rectangular centring attachment and is cross-sectionally identical to the drilled holes (10 , 12; 9, 11), and a continuous drilled guide hole (21) coaxial to the cylindrical centring attachment (19).

2. Hollow-chamber profile system according to Claim 1, **characterized in that** the cylindrical centring attachment (19) with the drilled guide hole (21) is arranged eccentrically to the rectangular centring attachment (20).

3. Hollow-chamber profile system according to Claim 1 or 2, **characterized in that** the cylindrical centring attachment (19) has a cylindrical recess whose radius corresponds to that of the drilled holes (9 - 12) and whose centre axis is perpendicular to the centre axis of the cylindrical centring attachment (19).

4. Hollow-chamber profile system according to one of Claims 1 to 3, **characterized in that** at least two adapters (18) are arranged between cylindrical guide parts (13) and threaded parts (15) in order to prevent a plurality of hollow-chamber profiles (1, 1') from twisting relative to one another, **in that** the corners (6) of the outer walls (3), the connecting regions (7) of the inner walls (4) to the outer walls (3), and intersections (8) of the inner walls (4) have cross-sectional enlargements, and in these walls the guide parts (13) and the threaded parts (15) are received and fully enclosed by outer-wall drilled holes (9, 11) and inner-wall drilled holes (10, 12) of corresponding cross section.

5. Hollow-chamber profile system according to Claim 1, **characterized in that** cross-sectional enlargements are formed in the corners (6) of the outer walls (3), at the connecting regions (7) of the inner walls (4) to the outer walls (3), and at intersections (8) of inner walls (4).

## Revendications

1. Système profilé à chambre creuse pour des constructions de précision, pour des calibres, des dispositifs de mesure et de contrôle, ainsi que des dispositifs de tout type, le profilé à chambre creuse (1) présentant une section transversale, rectangulaire ou carrée, dont des parois extérieures (3) présentent, selon une trame, des perçages (9, 11) perpendiculaires les uns aux autres, servant à loger des vis (17) et des parties filetées (11), munies d'un filetage (16) et s'ajustant dans les perçages (9, 11), du système profilé à chambre creuse, **caractérisé en ce que** le profilé à chambre creuse (1) présente au moins une paroi intérieure (4) perpendiculaire aux parois extérieures (3) du profilé à chambre creuse (1) et, de ce fait, plusieurs chambres creuses (2) de sections transversales identiques étant réalisées, et les parois intérieures et extérieures (4, 3) présentent des perçages (10, 12 ;9, 11) alignés entre eux et, dans chacune des chambres creuses (2), étant chaque fois insérée une pièce d'ajustement (18) du système de profilé à chambre creuse, avec un appendice de centrage (20) rectangulaire, correspondant chaque fois au profil des chambres creuses (2), et un jeu de centrages (19) cylindriques disposé sur l'appendice, ayant une section transversale identique à celle des perçages (10, 12 ; 9, 11), et un perçage de guidage (21) continu, coaxial à l'appendice de centrage (19) cylindrique.

2. Système profilé à chambre creuse selon la revendication 1, **caractérisé en ce que** l'appendice de centrage (19) cylindrique, ayant le perçage de guidage (21), est disposé de façon excentrée par rapport à l'appendice de centrage (20) rectangulaire.

3. Système profilé à chambre creuse, selon la revendication 1 ou 2, **caractérisé en ce que** l'appendice de centrage (19) cylindrique présente un évidement cylindrique, dont le rayon correspond à celui des perçages (9 à 12) et dont l'axe est perpendiculaire à l'axe de l'appendice de centrage (19) cylindrique.

4. Système profilé à chambre creuse, selon l'une des revendications 1 à 3, **caractérisé en ce qu'**au moins deux pièces d'ajustement (18), servant à la sécurité en rotation d'une pluralité de profils à chambre creuse (1, 1') entre eux, sont disposés entre les parties de guidage (13) et les parties filetées (15) cylindriques, **en ce que** les coins (6) des parois extérieures (3), les zones de raccordement (7) des parois intérieures (4) aux parois extérieures (3), ainsi que les croisements (8) des parois intérieure (4), présentent des grossissements de section transversale et que, dans ces parois, les parties de guidage (13) et les parties filetées (15) soient logées et complètement incluses par des perçages de paroi extérieure (9, 11) et des perçages de paroi intérieure (10, 12) ayant une section transversale correspondante.

5. Système profilé à chambre creuse, selon la revendication 1, **caractérisé en ce que** des grossissements de section transversale sont réalisées dans les coins (6) des parois extérieures (3), sur les zones de raccordement (7) des parois intérieures (4) aux parois extérieures (3) ainsi que sur des croisements (8) de parois intérieures (4).
